## Europäisches Patentamt

## European Patent Office

## Office européen des brevets

(19)

(11) Numéro de publication: **0 262 999**
**B1**

(12)

# FASCICULE DE BREVET EUROPEEN

(45) Date de publication du fascicule du brevet:
**18.10.89**

(51) Int. Cl.⁴: **B60T 8/18**

(21) Numéro de dépôt: **87401938.3**

(22) Date de dépôt: **27.08.87**

(54) **Correcteur de freinage asservi à la charge d'un véhicule.**

(30) Priorité: **18.09.86 FR 8613075**
**26.02.87 FR 8702537**

(43) Date de publication de la demande:
**06.04.88 Bulletin 88/14**

(45) Mention de la délivrance du brevet:
**18.10.89 Bulletin 89/42**

(84) Etats contractants désignés:
**DE ES GB IT**

(56) Documents cités:
**EP-A- 0 029 398**
**EP-A- 0 088 857**
**EP-A- 0 156 666**
**GB-A- 2 027 504**

(73) Titulaire: **BENDIX France, 126, rue de Stalingrad,
F-93700 Drancy(FR)**

(72) Inventeur: **Bequet, Franck, "Les Argonautes" 16, Allée
de la Toison d'Or, F-94000 Creteil(FR)**
Inventeur: **Levrai, Roland, 9bis, Av.Gaston
Monmousseau, F-93240 Stains(FR)**
Inventeur: **Maligne, Jean-Charles, 18, rue du Colonel
Fabien, F-93300 Aubervilliers(FR)**

(74) Mandataire: **Lejet, Christian et al, Division Technique
Service Brevets BENDIX Europe 126, rue de Stalingrad,
F-93700 Drancy(FR)**

ACTORUM AG

## Description

La présente invention se rapporte aux correcteurs de freinage, et, plus particulièrement à un tel correcteur asservi à la charge d'un véhicule, selon le preambule de la revendication 1.

Il est souhaitable, pour des raisons d'économie de place et de nombre de pièces, de relier un correcteur de freinage directement au ressort de suspension d'un véhicule en vue de faire varier le freinage des roues du véhicule en fonction de sa charge.

On connaît du document GB-A-1 577 029 un correcteur de freinage asservi à la charge d'un véhicule qui est disposé à une extrémité d'un ressort de suspension du véhicule et relié au ressort par un ensemble de cames de façon à faire varier la pression de freinage en fonction de la charge du véhicule. Ce dispositif présente des inconvénients en ce qu'il comprend un nombre important de pièces, ce qui le rend délicat, onéreux et peu fiable.

L'invention a donc pour objet de proposer un correcteur de freinage asservi à la charge d'un véhicule qui est de construction simple, de faible coûts de fabrication et de fiabilité accrue.

Pour ce faire, l'invention concerne un ensemble d'un élément de suspension et un correcteur de freinage destiné à être asservi à la charge d'un véhicule, le correcteur comprenant un corps dans lequel coulisse un piston formant un élément de clapet susceptible d'ouvrir ou de fermer un passage hydraulique entre une entrée et une sortie du correcteur, le piston étant relié par un moyen de liaison à un moyen de ressort de l'élément de suspension, caractérisé en ce que le moyen de liaison comprend un levier monté sur l'élément de suspension entre deux éléments de pivotement soumis à la force exercée par l'élément de suspension et disposés de façon à transmettre une partie de ladite force au levier.

D'autres caractéristiques et avantages de la présente invention ressortiront de la description suivante de deux modes de réalisation donnés à titre illustratif, mais nullement limitatif, faite en relation avec les dessins annexés sur lesquels :

- la figure 1 est une vue schématique d'un correcteur asservi à la charge d'un véhicule, selon un premier mode de réalisation de l'invention ; et
- la figure 2 est une vue schématique d'un deuxième mode de réalisation du correcteur suivant l'invention.

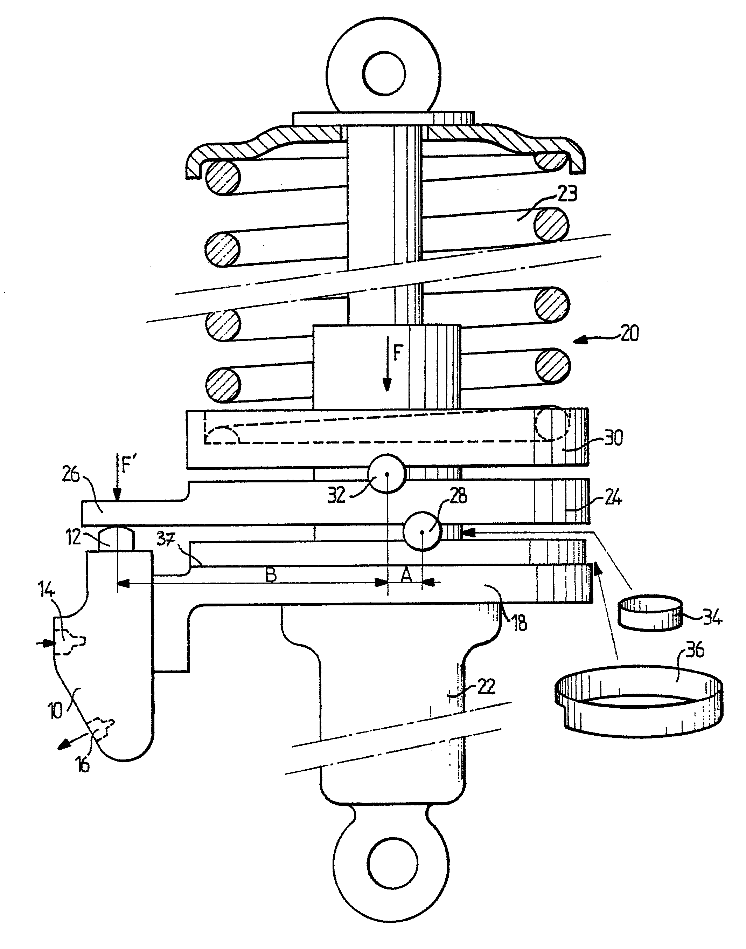

Comme représenté sur la figure 1, un correcteur de freinage asservi à la charge d'un véhicule comprend un corps de correcteur 10 dans lequel coulisse un piston 12 qui forme un élément de clapet dans un passage hydraulique (non représenté) entre une entrée 14 et une sortie 16. L'entrée 14 est destinée à être reliée à un émetteur hydraulique (non représenté), par exemple un maître-cylindre, et la sortie 16 est destinée à être reliée à une récepteur hydraulique (non représenté), par exemple les freins de roues arrières du véhicule. Le piston 12 est déplaçable entre une position ouvrant le passage hydraulique et une position fermant ce passage.

Le corps de correcteur 10 est rattaché à un élément annulaire 18 monté fixe sur un ensemble de suspension 23. Un deuxième élément annulaire 24 est monté avec jeu autour de l'amortisseur 22 et comporte une extension 26 qui coopère avec le piston 12 du correcteur. Le deuxième élément annulaire 24 est monté à pivotement sur le premier élément annulaire 18 par l'intermédiaire de deux rouleaux 28 alignés, dont un seul est représenté sur la figure, qui sont reçus dans des gorges dans chaque élément annulaire. Le centre de chaque rouleau 28 est situé à une distance A de l'axe longitudinal de l'ensemble de suspension 20.

Un élément annulaire 30 en forme de coupe est monté avec jeu autour de l'amortisseur 22 et coopère avec le deuxième élément annulaire 24 par l'intermédiaire de deux rouleaux 32 alignés, dont un seul est représenté sur la figure, qui sont montés sour l'axe lo ngitudinal de l'ensemble de suspension 20 dans des gorges dans les deux éléments 24,30.

Une extrémité du ressort de suspension 23 est reçue dans l'élément annulaire 30. L'ensemble de suspension 20 est destiné à être monté entre une partie suspendue du véhicule et le châssis du véhicule (non représenté).

Deux bagues 34 et 36 sont disposées sur le dispositif, l'une 34 à l'intérieur du deuxième élément annulaire et l'autre 36 sur une bride 37 à l'extérieur de façon à retenir les rouleaux 28 et 32. La bague 36 peut être réalisée en matériau élastomère.

L'axe longitudinal du piston 12 du correcteur est disposé à une distance B de l'axe de l'ensemble de suspension 20. Ainsi une force F exercée par la charge du véhicule sur l'élément annulaire 30 exerce une force

$$F' = F \times \frac{A}{A+B}$$

sur le piston 12 du correcteur. Etant donné que la distance 1, qui est de l'ordre de 5mm, est faible par rapport à la distance B, qui, dans une voiture de tourisme est d'environ 70 mm la force exercée sur le piston 12 du correcteur est également faible. Cet agencement permet d'utiliser un correcteur actuel de série sans modification, ainsi qu'un ensemble de suspension de série qui nécessite que de légères modifications.

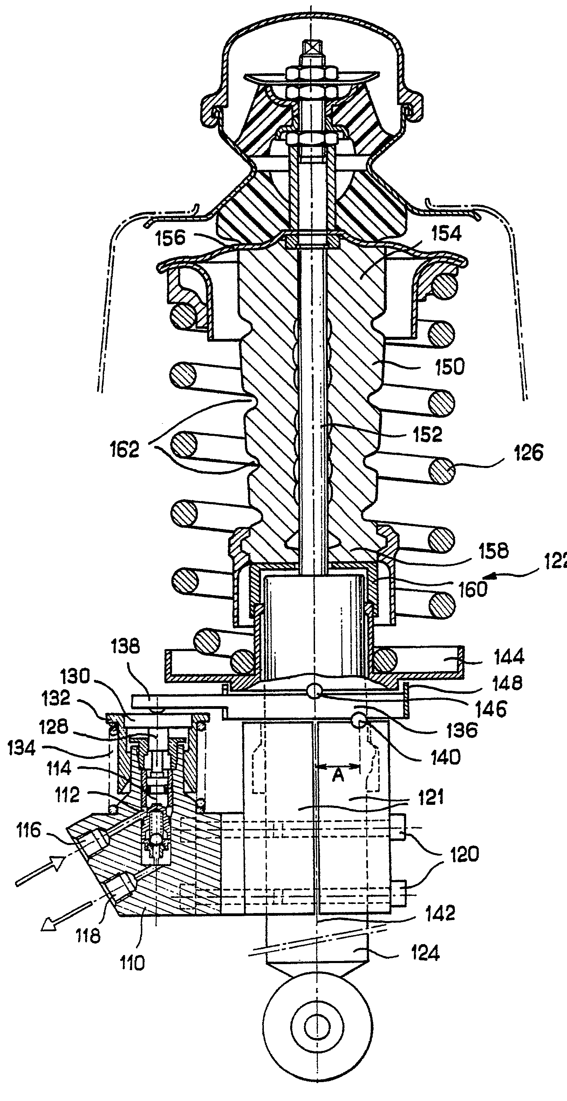

Certains véhicules sont équipés d'un ensemble de ressort-amortisseur dans lequel l'amortisseur comprend un manchon de matériau élastomère monté sur la tige du piston de l'amortisseur. Avec un tel ensemble il est souhaitable que la force transmise au correcteur reflète réellement l'effort de suspension. On atteint ce résultat avec le correcteur de freinage représenté sur la figure 2 et décrit à la suite.

Comme représenté sur cette figure, un correcteur de freinage asservi à la charge d'un véhicule comprend un corps de correcteur 110 comportant un alésage 112 dans lequel est monté à coulissement un piston 114 qui forme, de manière connue en soi, un élément de clapet dans un passage hydraulique entre une entrée 116 est une sortie 118 de fluide. L'entrée 116 est destinée à être reliée à un émetteur hydraulique (non-représenté), par exemple un maître-cylindre, et la sortie est destinée à être reliée à un récepteur hydraulique (non représenté), par exemple les freins de roues arrières du véhicule. Le piston 114 est déplaçable entre une position ouvrant le passage hydraulique et une position fermant ce passage.

Le corps du correcteur 110 est rattaché par des vis 120 et deux coquilles 121 à un ensemble de suspension 122 qui comprend un amortisseur 124 et un ressort de suspension 126.

Le piston 114 comporte une tête 128 qui fait saillie à l'extérieur du corps du correcteur 110. Un élément 130, en forme de gobelet, est monté à coulissement autour du corps de correcteur 110 et prend appui sur la tête 128 du piston 114. L'élément 130 comporte une bride annulaire 132 sur laquelle prend appui un ressort 134 monté sur le corps du correcteur 110.

Un élément annulaire 136 formant levier est monté avec jeu autour de l'amortisseur 124 et comporte une extension 138 qui coopère avec l'élément 130 en forme de coupe. L'élément annulaire 136 est monté à pivotement sur l'amortisseur 124 par l'intermédiaire de deux rouleaux 140 alignés, dont un seul est représenté sur la figure. Le centre de chaque rouleau 140 est situé à une distance A de l'axe longitudinal 142 de l'ensemble de suspension 122.

Un deuxième élément annulaire 144 est monté à coulissement à faible jeu autour de l'amortisseur 124, et coopère avec le premier élément annulaire 136 par l'intermédiaire de deux rouleaux 146 alignés, dont un seul est représenté sur la figure, qui sont montés sur l'axe longitudinal 142 dans des gorges dans les deux éléments 136,144. Les rouleaux 146 sont retenus en place par un bord annulaire relevé 148 du premier élément annulaire 136.

Une extrémité du ressort de suspension 126 est reçue dans le deuxième élément annulaire 144. L'ensemble de suspension 122 est destiné à être monté entre une partie suspendue du véhicule et le châssis de celui-ci (non représentés).

Le dispositif comporte un manchon 150 en matière élastomère monté autour d'une tige 152 du piston de l'amortisseur 124. Une extrémité 154 du manchon 150, celle du haut en regardant le dessin, est montée fixe sur une butée 156 qui, dans l'exemple illustré, est solidaire du châssis du véhicule. La longueur axiale du manchon 150 est choisie de manière que, quand le véhicule sur lequel le dispositif est monté est vide, l'autre extrémité 158 du manchon 150 ne vient pas en appui sur une coupelle 160 montée fixe sur le deuxième élément annulaire 144.

Quand le véhicule est chargé, ou quand la suspension du véhicule amortit un cahot, l'ensemble de suspension 122 est comprimé axialement et l'extrémité 158 du manchon 150 vient en butée contre la coupelle 160. La compression de l'ensemble de suspension 122 au-delà de ce point entraîne la compression et du ressort de suspension 126 et du manchon 150. Le manchon 150 comporte des rainures circonférentielles espacées 162 qui assurent une déformation progressive du manchon 150, fonction de l'augmentation de la charge.

Ainsi, quand l'ensemble de suspension 122 est comprimé au-delà d'une valeur prédéterminée, l'extrémité 158 du manchon 150 vient en butée sur la coupelle 160 et le manchon 150 exerce une force supplémentaire sur le deuxième élément annulaire 144. Cette combinaison de forces est transmise, comme dans la demande de brevet principale, par l'extension 138 au piston 114 du correcteur.

La compression du ressort de suspension 126 est sensiblement linéaire en fonction de la charge qu'il subit, tandis que la caractéristique de l'ensemble ressort-manchon 126-150 peut être choisie pour être non-linéaire avec la charge.

Le piston 114 du correcteur 110 reçoit donc une force qui, grâce à la présente invention, reflète de manière plus fidèle l'effort réel de suspension.

Le manchon 150 pourrait être remplacé par un moyen de ressort, par exemple un ressort hélicoïdal.

## Revendications

1. Ensemble d'un élément de suspension (20 ; 22) et un correcteur de freinage (10 ; 110) comprenant un corps dans lequel coulisse un piston (12 ; 114) formant un élément de clapet susceptible d'ouvrir ou fermer un passage hydraulique entre une entrée (14 ; 116) et une sortie (16 ; 118) du correcteur, le piston (12 ; 114) étant relié par un moyen de liaison à un moyen de ressort (23 ; 126) de l'élément de suspension (20 ; 122), caractérisé en ce que le moyen de liaison comprend un levier (24 ; 136) monté sur l'élément de suspension (20 ; 122) entre deux éléments de pivotement (28 ; 32 ; 140 ; 146) soumis à la force exercée par l'élément de suspension (20 ; 122) et disposés de façon à transmettre une partie de ladite force au correcteur.

2. Ensemble selon la revendication 1, caractérisé en ce que le levier (24 ; 136) a une forme sensiblement annulaire et est monté autour de l'élément de suspension (20 ; 122).

3. Ensemble selon la revendication 1 ou 2 caractérisé en ce que les éléments de pivotement (28 ; 32 ; 140 ; 146) comprennent chacun un rouleau monté dans une gorge correspondante dans le levier (24 ; 136).

4. Ensemble selon l'une des revendications 1 à 3, caractérisé en ce que l'un (32 ; 146) des éléments de pivotement est disposé sur un axe longitudinal de l'élément de supension (20 ; 122).

5. Ensemble selon la revendication 1 caractérisé en ce qu'il comprend, de plus, un deuxième moyen de ressort (150) monté sur l'élément de suspension (122) de manière à exercer une force supplémentaire sur le levier (136) quand l'élément de suspension (122) subit une force qui dépasse un seuil prédéterminé.

## Patentansprüche

1. Anordnung eines Aufhängungselements (20; 122) und eines Bremskorrektors (10; 110), der einen Körper enthält, in dem ein Kolben (12; 114) gleitet, der ein Ventilklappenelement bildet, das dazu bestimmt ist, einen hydraulischen Übergang zwischen einem Eingang (14; 116) und einem Ausgang (16; 118) des Korrektors zu öffnen oder zu schließen, wobei der Kolben (12; 114) durch Verbindungsmittel mit einem Federmittel (23; 126) des Aufhängungselements (20; 122) verbunden ist, dadurch gekennzeichnet, daß die Verbindungsmittel einen Hebel (24; 136) enthalten, der auf einem Federungselement (20; 122) zwischen zwei Schwenkelementen (28; 32; 140; 146) angebracht ist, die der durch das Aufhängungselement (20; 122) ausgeübten Kraft unterworfen und so angeordnet sind, daß sie einen Teil der Kraft auf den Korrektor übertragen.

2. Anordnung nach Patentanspruch 1, dadurch gekennzeichnet, daß der Hebel (24; 136) eine im wesentlichen ringförmige Form hat und um das Aufhängselement (20; 122) angeordnet ist.

3. Anordnung nach Patentanspruch 1 oder 2, dadurch gekennzeichnet, daß jedes der Schwenkelemente (28; 32; 140; 146) eine Rolle enthält, die in einem entsprechenden Nut in dem Hebel (24; 136) angebracht ist.

4. Anordnung nach einem der Patentansprüche 1 bis 3, dadurch gekennzeichnet, daß eines (32; 146) der Schwenkelemente auf einer Längsachse des Aufhängungselementes (20; 122) angebracht ist.

5. Anordnung nach Patentanspruch 1, dadurch gekennzeichnet, daß er zusätzlich ein zweites Federmittel (150) enthält, das auf dem Aufhängungselement (122) so angebracht ist, daß es eine zusätzliche Kraft auf den Hebel (136) ausübt, wenn das Aufhängungselement (122) einer Kraft unterworfen wird, die einen vorherbestimmten Schwellwert überschreitet.

## Claims

1. Assembly consisting of a suspension element (20; 22) and of a brake corrector (10; 110) comprising a body, in which slides a piston (12; 114) forming a shutter element capable of opening or closing a hydraulic passage between an inlet (14; 116) and an outlet (16; 118) of the corrector, the piston (12; 114) being connected by a connection means to a spring means (23; 126) of the suspension element (20; 122), characterized in that the connection means comprising a lever (24; 136) mounted on the suspension element (20; 122) between two pivoting elements (28, 32; 140; 146) which are subjected to the force exerted by the suspension element (20; 122) and which are arranged so as to transmit some of the said force to the corrector.

2. Assembly according to Claim 1, characterized in that the lever (24; 136) has a substantially annular shape and is mounted about the suspension element (20; 122).

3. Assembly according to Claim 1 or 2, characterized in that the pivoting elements (28; 32; 140; 146) each comprise a roller mounted in a corresponding groove in the lever (24; 136).

4. Assembly according to one of Claims 1 to 3, characterized in that one (32; 146) of the pivoting elements is arranged in a longitudinal axis of the suspension element (20; 122).

5. Assembly according to Claim 1, characterized in that it also possesses a second spring means (150) mounted on the suspension element (122), so as to exert an additional force on the lever (136) when the suspension element (122) undergoes a force which exceeds a predetermined threshold.

EP 0 262 999 B1